# EUROPEAN PATENT SPECIFICATION

(11) **EP 3 533 311 B1**
(45) Date of publication and mention of the grant of the patent: **30.12.2020**
(21) Application number: 19159954.7
(22) Date of filing: 28.02.2019
(51) Int. Cl.: A01D 34/00, G05D 1/02

(54) **MOVING ROBOT SYSTEM**
MOBILES ROBOTERSYSTEM
SYSTÈME DE ROBOT MOBILE

(30) Priority: 28.02.2018 KR 20180024834
(43) Date of publication of application: 04.09.2019
(73) Proprietor: LG Electronics Inc., Seoul 07336 (KR)
(72) Inventor: LEE, Jaehoon, 08592 Seoul (KR); WOO, Jongjin, 08592 Seoul (KR); KIM, Dongseong, 08592 Seoul (KR); NAM, Dongkyun, 08592 Seoul (KR)
(74) Representative: Vossius & Partner Patentanwälte Rechtsanwälte mbB

(56) References cited:
- EP-A1- 1 047 983
- EP-A1- 2 547 191
- EP-A2- 2 853 975
- EP-A2- 2 945 037

## Description

The present invention relates to a moving robot system with a moving robot capable of returning back to an docking station thereof along a shortest route without any damage on the ground.

Robots were developed for industrial use and prompted automation of production operations. Recently, they are being used more widely, for example, in the medical industry and the aerospace industry. There are even domestic robots used for household chores. Among such robots, a type of robot capable of traveling on it own is called a moving robot. A typical example of a moving robot used for a home's outdoor environment is a lawn mower robot.

For a moving robot travelling in an indoor space, an movable area is restricted by a wall or furniture, and, for a moving robot travelling an outdoor space, it is necessary to set a movable area in advance. In addition, a movable area needs to be limited to allow the lawn mower robot to travel on a grass area.

In an existing technology (Korean Patent Application Publication No. 2015-0125508), a wire for setting an area to be travelled by a lawn mower robot may be installed in the lawn mower robot, and the lawn mower robot may sense a magnetic field formed by currents flowing by the wire and move in an area set by the wire.

In addition, according to an existing technology, a lawn mower robot is not able to accurately recognize a position of a charging station, but simply keeps travelling along a boundary wire to find the position of the charging station and be then charged.

If the lawn mower robot travels along the boundary wire to find the position of the charging station according to the existing technology, a travelling distances of the lawn mower robot increases and a battery life thereof is reduced.

In addition, because the lawn mower robot according to the existing technology returns back to the charging station along the same route, it makes pits on the ground along the return route and the pits interrupts the lawn mower robot from travelling.

In addition, installation of an additional sensor in the lawn mower robot to recognize the position of the charging station adds more costs.

EP 2 853 975 A2 relates to a robotic mower navigation system including a plurality of sensors on a robotic mower that detect strength and polarity of a magnetic field from an electric current through a boundary wire.

An object of the present invention is to provide a moving robot, which reduces a travel route, and a moving robot system.

Another object of the present invention is to provide a moving robot, which makes less pits on the ground when returning back to a charging station by following the same route along a boundary, and a moving robot system.

Yet another object of the present invention is to provide a moving robot which is capable of easily and accurately recognizing a position of a charging station.

Yet another object of the present invention is to provide a moving robot which shares a sensor for recognizing a travel route, without an additional sensor being attached.

The invention is defined by a moving robot system according to claim 1 in order to achieve the above objects.

Preferred aspects are defined by the dependent claims.

In a preferred aspect, the present invention may be characterized by recognizing at least horizontal magnetic field.

Specifically, the present invention includes: a moving robot which comprises a body defining an exterior; a travelling unit configured to move the body; a boundary signal detector configured to detect a proximity boundary signal generated in a proximity boundary area in which a portion of a first travel area and a portion of a second travel area are proximal to each other; and a controller configured to define a proximity boundary line based on the proximity boundary signal, and control the travelling unit such that the body performs a homing travel which indicates travelling along the proximity boundary line.

The controller may be further configured to perform the homing travel upon receiving a homing signal.

The controller may be further configured to control the travelling unit such that, during the homing travel, the body converts a direction of travel a random number of times within a homing travel area which is set about the proximity boundary line.

The controller may be further configured to control the travelling unit such that, during the homing travel, the body travels along a homing travel route which crosses the proximity boundary line a random number of times.

The controller may be further configured to define a first homing boundary line and a second homing boundary line which are parallel to the proximity boundary line positioned therebetween.

The controller is configured to control the travelling unit such that, during the homing travel, the body converts a direction of travel on the first and second homing boundary lines and travels in a direction of travel which crosses the proximity boundary line.

The controller may be further configured to control the travelling unit such that, during the homing travel, the body enters the first travel area and the second travel area, alternatively.

The boundary signal detector may comprise a magnetic field sensor.

The boundary signal detector may be further configured to distinguish the proximity boundary signal and boundary signals of the first travel area and the second travel area based on a difference in strength of magnetic fields.

The boundary signal detector may be further configured to distinguish the proximity boundary signal and boundary signals of the first travel area and the second travel area based on a difference in distribution of magnetic fields.

The controller may be further configured to, when the proximity boundary signal is not detected at a time of receiving the homing signal, control the travelling unit such that the body travels in accordance of a boundary signal of the first travel area and a boundary signal of the second travel area.

The boundary signal detector may be further configured to detect a docking position signal generated in a docking unit, and the controller may be further configured to, when the docking position signal is detected during the homing travel, control the travelling unit such that the body performs a docking travel.

The boundary signal detector may be further configured to distinguish the docking position signal and the proximity boundary signal based on a difference in direction of magnetic fields.

The present invention also includes: a first boundary wire and a second boundary wire respectively defining a first travel area and a second travel ; area.

The first boundary wire and the second boundary wire may cross each other within the proximity boundary area.

The first boundary wire and the second boundary wire may be arranged parallel to each other within the proximity boundary area.

The first boundary wire and the second boundary wire at least partially overlap each other within the proximity boundary area.

The moving robot system further comprises a docking unit to which the moving robot is docked for recharging.

Preferably, one end of the proximity boundary area is arranged proximal to the docking unit.

The docking unit may further include a first wire terminal wire and a second wire terminal which are connected to a power supply.

Preferably, one end of the first boundary wire and one end of the second boundary wire may be connected to the first wire terminal.

Also preferably, the other end of the first boundary wire and the other end of the second boundary wire may be connected to the second wire terminal.

The controller may be further configured to control the travelling unit such that, during the moving travel, the body travels along a homing travel route which crosses the proximity boundary line a random number of times.

The docking unit may further include a reference wire which extends in an upward-downward direction crossing the boundary wires, and which generates a docking position signal.

### BRIEF DESCRIPTION OF THE DRAWINGS

The embodiments will be described in detail with reference to the following drawings in which like reference numerals refer to like elements wherein:
FIG. 1 is a perspective view of a moving robot 100 according to the present disclosure;
FIG. 2 is a front view of the moving robot 100 of FIG. 1;
FIG. 3 is a right side view of the moving robot 100 shown in FIG. 1;
FIG. 4 is a bottom view of the moving robot 100 shown in FIG. 1;
FIG. 5 is a perspective view of a docking device 200 for docking the moving robot 100 shown in FIG. 1;
FIG. 6 is a front view of the docking device 200 shown in FIG. 5;
FIG. 7A is a rear view of a reference wire for use with the present invention;
FIG. 7B is a side view of a reference wire for use with the present invention;
FIG. 8 is a block diagram illustrating a control relation of the moving robot 100 shown in FIG. 1;
FIG. 9 is a diagram illustrating a moving robot system according to an embodiment of the present invention;
FIG. 10 is a zoomed-in view of part of the moving robot system shown in FIG. 9;
FIG. 11 is a diagram illustrating a homing travel route of a moving robot according to an embodiment of the present invention;
FIG. 12 is a flowchart of a control method of a moving robot according to an embodiment of the present invention;
FIG. 13 is a diagram illustrating a moving robot system according to another embodiment of the present invention; and
FIG. 14 is a diagram illustrating a zoomed-in version of part of the moving robot system shown in FIG. 13 and a homing travel route.

The terms "forward (F)/rearward (R)/upward (U)/downward (D)/indoor (I)/outdoor (O)" mentioned in the following description are defined as shown in the drawings. However, the terms are used merely to clearly understand the present invention, and therefore the above-mentioned directions may be differently defined.

The terms "first", "second" etc. are used to distinguish elements, and not related to a sequence, importance levels, or a master-servant relationship of elements. For example, only a second element may be included without a first element.

In the drawings, thickness or size of each layer may be exaggerated, omitted, or schematically illustrated for convenience of description and clarity. Also, size or area of each constituent element does not entirely reflect the actual size thereof.

In addition, angles and directions mentioned while explaining structures are based on the drawings. Therefore, if the reference points of angles or positional relationships are not clearly mentioned in the following description, refer to the drawings.

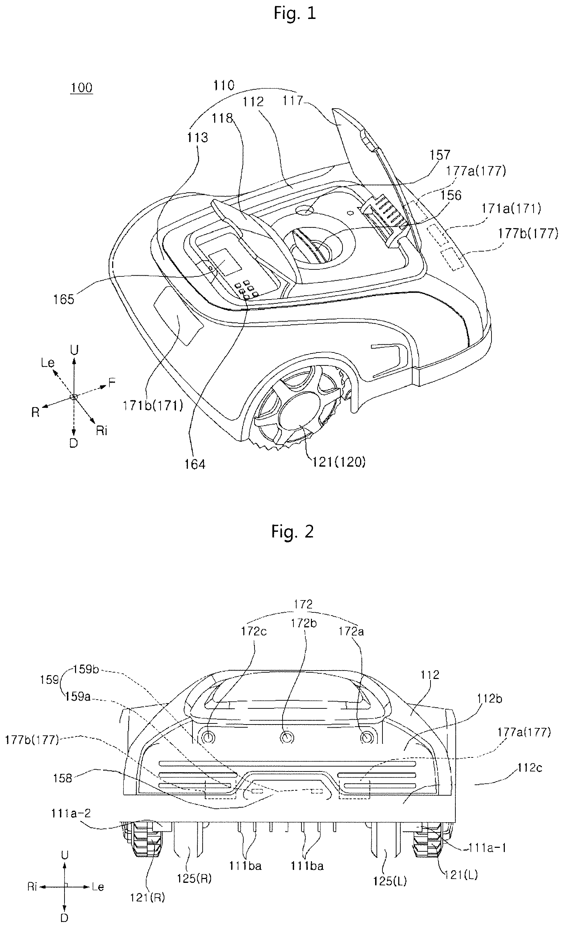

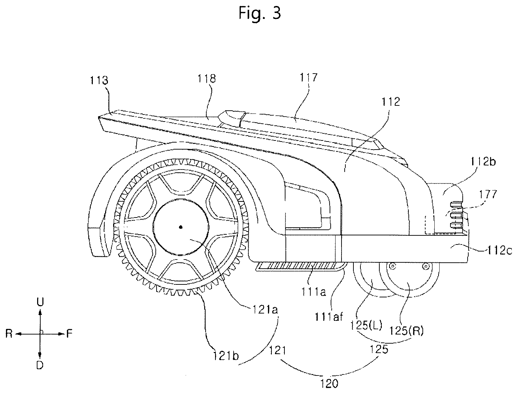

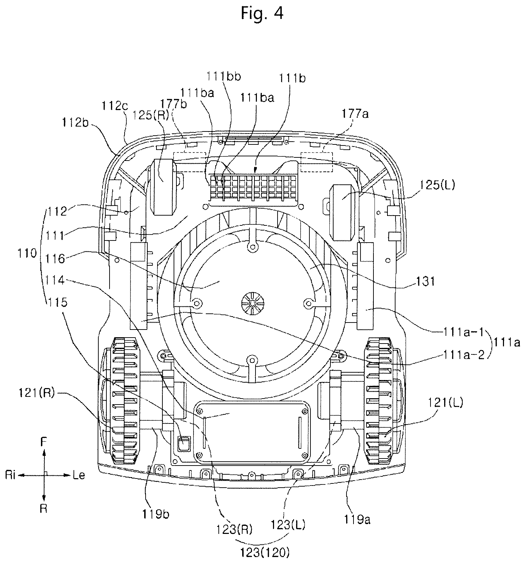

Hereinafter, a moving robot is described as a lawn mower 100 with reference to FIGS. 1 to 6, but the present disclosure is not necessarily limited thereto.

With reference to FIGS. 1 to 4, a moving robot 100 includes a body 110 that defines an exterior of the moving robot 100. The body 110 forms an inner space. The moving robot 100 includes a travelling unit 120 that moves the body 110 against a travel surface. The moving robot 100 includes a task execution unit 130 that performs a predetermined task.

The body 110 includes a frame 111 to which a driving motor module 123, which will be described later, is fixed. A blade motor 132, which will be described later, is fixed to the frame 111. The frame 111 supports a battery which will be described later. The frame 111 provides a structure which supports even other components which are not mentioned herein. The frame 111 is supported by an auxiliary wheel 125 and a driving wheel 121.

The body 110 includes a lateral blocking part 111a which prevent a user's finger from entering a blade 131 from a side of the blade 131. The lateral blocking part 111a is fixed to the frame 111. The lateral blocking part 111a is projected downward, compared to a button surface of an other part of the frame 111. The lateral blocking part 111a is arranged to cover an upper side of a space between the driving wheel 121 and the auxiliary wheel 125.

A pair of lateral blocking parts 111a-1 and 111a-2 is arranged on the left and right sides to the blade 131. The lateral blocking part 111a is spaced a predetermined distance apart from the blade 131.

A front surface 111af of the lateral blocking part 111a is formed in a round shape. The front surface 111af forms a surface that is bent in a round manner upwardly in a forward direction from a bottom surface of the lateral blocking part 111a. By use of the shape of the front surface 111af, the lateral blocking parts 111a is able to easily go over an obstacle of a predetermined height or lower thereunder when the moving robot 100 moves forward.

The body 110 includes a front blocking part 111b which prevents a user's finger from entering between the blade 131 from a front of the blade 131. The front blocking part 111b is fixed to the frame 111. The front blocking part 111b is arranged to partially cover an upper side of a space between a pair of auxiliary wheels 125(L) and 125(R).

The front blocking part 111b includes a projected rib 111ba which is projected downward compared to a bottom surface of another part of the frame 111. The projected rib 111ba extends in a front-rear direction. An upper portion of the projected rib 111ba is fixed to the frame 111, and a lower portion of the projected rib 111ba forms a free end.

A plurality of projected ribs 111ba may be spaced apart in a left-right direction from each other. The plurality of projected ribs 111ba may be arranged in parallel to each other. A gap is formed between two adjacent projected ribs 111ba.

A front surface of the projected ribs 111ba is formed in a round shape. The front surface of the projected rib 111ba forms a surface that is bent in a round manner upwardly in a forward direction from a bottom surface of the projected rib 111ba. By use of the shape of the front surface of the projected rib 111ba, the projected rib 111ba is able to easily go over an obstacle of a predetermined height or lower thereunder when the moving robot 100 moves forward.

The front blocking part 111b includes an auxiliary rib 111bb which reinforces rigidity. The auxiliary ribs 111bb for reinforcing rigidity of the front blocking part 111b is arranged between upper portions of two adjacent projected ribs 111ba. The auxiliary rib 111bb may be projected downward and may be in a lattice shape which extends.

In the frame 111, a caster which supports the auxiliary wheel 125 rotatably is arranged. The caster is arranged rotatable with respect to the frame 111. The caster is disposed rotatable about a vertical axis. The caster is disposed in a lower side of the frame 111. The caster is provided as a pair of casters corresponding to the pair of auxiliary wheels 125.

The body 110 includes a case 112 which covers the frame 111 from above. The case 112 defines a top surface and front/rear/left/right surfaces of the moving robot 100.

The body 110 may include a case connection part (not shown) which fixes the case 112 to the frame 111. An upper portion of the case connection part may be fixed to the case 112. The case connection part may be arranged movable with respect to the frame 111. The case connection part may be arranged movable only upwardly and downwardly with the frame 111. The case connection part may be provided movable in a predetermined range. The case connection part moves integrally with the case 112. Accordingly, the case 112 is movable with respect to the frame 111.

The body 110 includes a bumper 112b which is disposed at the front. The bumper 112b absorbs an impact upon collision with an external obstacle. At a front surface of the bumper 112b, a bumper groove recessed rearward and elongated in a left-right direction may be formed. The bumper groove may be provided as a plurality of bumper grooves spaced apart from each other in an upward-downward direction. A lower end of the projected rib 111ba is positioned lower than a lower end of the auxiliary rib 111bb.

The front surface and the left and right surfaces of the bumper 112b are connected. The front surface and the left and right surfaces of the bumper 112b are connected in a round manner.

The body 110 may include an auxiliary bumper 112c which is disposed embracing an exterior surface of the bumper 112b. The auxiliary bumper 112c is coupled to the bumper 112b. The auxiliary bumper 112c embraces lower portions of the front, left, and right surfaces of the bumper 112b. The auxiliary bumper 112c may cover the lower half portions of the front, left, and right surfaces of the bumper 112b.

The front surface of the auxiliary bumper 112c is disposed ahead of the front surface of the bumper 112b. The auxiliary bumper 112c forms a surface projected from a surface of the bumper 112b.

The auxiliary bumper 112c may be formed of a material which is advantageous in absorbing impact, such as rubber. The auxiliary bumper 112c may be formed of a flexible material.

The frame 111 may be provided with a movable fixing part (not shown) to which the bumper 112b is fixed. The movable fixing part may be projected upward of the frame 111. The bumper 112b may be fixed to an upper portion of the movable fixing part.

The bumper 112b may be disposed movable in a predetermined range with the frame 111. The bumper 112b may be fixed to the movable fixing part and thus movable integrally with the movable fixing part.

The movable fixing part may be disposed movable with respect to the frame 111. The movable fixing part may be rotatable about a virtual rotation axis in a predetermined range with the frame 111. Accordingly, the bumper 112b may be movable integrally with the movable fixing part with respect to the frame 111.

The body 110 includes a handle 113. The handle 113 may be disposed at the rear of the case 112.

The body 110 includes a battery slot 114 into and from which a battery is able to be inserted and separated. The battery slot 114 may be disposed at a bottom surface of the frame 111. The battery slot 114 may be disposed at the rear of the frame 111.

The body 110 includes a power switch 115 to turn on/off power of the moving robot 100. The power switch 115 may be disposed at the bottom surface of the frame 111.

The body 110 includes a blade protector 116 which hides the lower side of the central portion of the blade 131. The blade protector 116 is provided to expose centrifugal portions of blades of the blade 131 while hiding the central portion of the blade 131.

The body 110 includes a first opening and closing door 117 which opens a portion in which a height adjuster 156 and a height indicator 157 are arranged. The first opening and closing door 117 is hinge-coupled to the case 112 to be opened and closed. The first opening and closing door 117 is arranged in a top surface of the case 112.

The first opening and closing door 117 is formed in a plate shape, and, when closed, covers the top of the height adjuster 156 and the height indicator.

The body 110 includes a second opening and closing door 118 which opens and closes a portion in which a display module 165 and an input unit 164 is arranged. The second opening and closing door 118 is hinge-coupled to the case 112 to be opened and closed. The second opening and closing door 118 is arranged in a top surface of the case 112. The second opening and closing door 118 is disposed behind the first opening and closing door 117.

The second opening and closing door 118 is formed in a plate shape, and, when closed, covers the display module 165 and the input unit 164.

An available opening angle of the second opening and closing door 118 is predetermined to be smaller than an available opening angle of the first opening and closing door 117. In doing this, even when the second opening and closing door 118 is opened, a user is allowed to easily open the first opening and closing door 117 and easily manipulate the height adjuster 156. In addition, even when the second opening and closing door 118 is opened, the user is allowed to visually check content of the height display 157.

For example, the available opening angle of the first opening and closing door 117 may be about 80 to 90 degrees with reference to the closed state of the first opening 117. For example, the available opening angle of the second opening and closing door 118 may be about 45 to 60 degrees with reference to the closed state of the second opening and closing door 118.

A rear of the first opening and closing door 117 is lifted upward from a front thereof to thereby open the first opening and closing door 117, and a rear of the second opening and closing door 118 is lifted upward from a front thereof to thereby open the second opening and closing door 118. In doing so, even while the lawn mower 100 moves forward, a user located in an area behind the lawn mower 100, which is a safe area, is able to open and close the first opening and closing door 117 and the second opening and closing door 118. In addition, in doing so, opening of the first opening and closing door 117 and opening of the second opening and closing door 118 may be prevented from intervening each other.

The first opening and closing door 117 may be rotatable with respect to the case 112 about a rotation axis which extends from the front of the first opening and closing door 117 in a left-right direction. The second opening and closing door 118 may be rotatable with respect to the case 112 about a rotation axis which extends from the front of the second opening and closing door 118 in the left-right direction.

The body 110 may include a first motor housing 119a which accommodates a first driving motor 123(L), and a second motor housing 119b which accommodates a second driving motor 123(R). The first motor housing 119a may be fixed to the left side of the frame 111, and the second motor housing 119b may be fixed to the right side of the frame 111. A right end of the first motor housing 119a is fixed to the frame 111. A left end of the second motor housing 119b is fixed to the frame 111.

The first motor housing 119a is formed in a cylindrical shape that defines a height in the left-right direction. The second motor housing 119b is formed in a cylindrical shape that defines a height in the left-right direction.

The traveling part 120 includes the driving wheel 121 that rotates by a driving force generated by the driving motor module 123. The traveling part 120 may include at least one pair of driving wheels 121 which rotate by a driving force generated by the driving motor module 123. The driving wheel 121 may include a first wheel 121(L) and a second wheel 121(R), which are provided on the left and right sides and rotatable independently of each other. The first wheel 121(L) is arranged on the left side, and the second wheel 121(R) is arranged on the right side. The first wheel 121(L) and the second wheel 121(R) are spaced apart in a left-right direction from each other. The first wheel 121(L) and the second wheel 121(R) are arranged in a lower side at the rear of the body 110.

The first wheel 121(L) and the second wheel 121(R) are rotatable independently of each other so that the body 110 is rotatable and forward movable relative to a ground surface. For example, when the first wheel 121(L) and the second wheel 121(R) rotate at the same speed, the body 110 is forward movable relative to the ground surface. For example, when a rotation speed of the first wheel 121(L) is faster than a rotation speed of the second wheel 121(R) or when a rotation direction of the first wheel 121(L) and a rotation direction of the second wheel 121(R) are different from each other, the body 110 is rotatable against the ground surface.

The first wheel 121(L) and the second wheel 121(R) may be formed to be greater than the auxiliary wheel 125. A shaft of the first driving motor 123(L) may be fixed to the center of the first wheel 121(L), and a shaft of the second driving motor 123(R) may be fixed to the center of the second wheel 121(R).

The driving wheel 121 includes a wheel circumference part 121b which contacts the ground surface. For example, the wheel circumference part 121b may be a tire. In the wheel circumference part 121b, a plurality of projections for increasing a frictional force with the ground surface may be formed.

The driving wheel 121 may include a wheel fame, which fixes the wheel circumference part 121b and receives a driving force for the motor 123. A shaft of the motor 123 is fixed to the center of the wheel frame to receive a rotation force. The wheel circumference part 121b is arranged surrounding a circumference of the wheel frame.

The driving wheel 121 includes a wheel cover 121a which covers an exterior surface of the wheel frame. With reference to the wheel frame, the wheel cover 121a is arranged in a direction opposite to a direction in which the motor 123 is arranged. The wheel cover 121a is arranged at the center of the wheel circumference part 121b.

The traveling part 120 includes the driving motor module 123 which generates a driving force. The traveling part 120 includes the driving motor module 123 which provides a driving force for the driving wheel 121. The driving motor module 123 includes the first driving motor 123(L) which provides a driving force for the first wheel 121(L), and the second driving motor 123(R) which provides a driving force for the second wheel 121(R). The first driving motor 123(L) and the second driving motor 123(R) may be spaced apart in a left-right direction from each other. The first driving motor 123(L) may be disposed on the left side of the second driving motor 123(R)

The first driving motor 123(L) and the second driving motor 123 (R) may be arranged at a lower side of the body 110. The first driving motor 123(L) and the second driving motor 123(R) may be arranged at the rear of the body 110.

The first driving motor 123(L) may be arranged on the right side of the first wheel 121(L), and the second driving motor 123(R) is arranged on the left side of the second wheel 121(R). The first driving motor 123(L) and the second driving motor 123(R) are fixed to the body 110.

The first driving motor 123(L) may be arranged inside the first motor housing 119a, with a motor shaft being projected leftward. The second driving motor 123(R) may be arranged inside the second motor housing 119b, with a motor shaft being projected rightward.

In this embodiment, the first wheel 121(L) and the second wheel 121(R) may be connected to a rotation shaft of the first driving motor 123(L) and a rotation shaft of the second driving motor 123(R), respectively. Alternatively, a component of a shaft or the like may be connected to the first wheel 121(L) and the second wheel 121(R). Alternatively, a rotation force of the motor 123(L) or 123(R) may be transferred to the wheel 121a or 121b by a gear or a chain.

The traveling unit 120 may include the auxiliary wheel 135 which supports the body 110 together with the driving wheel 121. The auxiliary wheel 125 may be disposed ahead of the blade 131. The auxiliary wheel 125 is a wheel which does not receives a driving force generated by a motor, and the auxiliary wheel 125 auxiliarily supports the body 110 against the ground surface. The caster supporting a rotation shaft of the auxiliary wheel 125 is coupled to the frame 111 to be rotatable about a vertical axis. There may be provided a first auxiliary wheel 125(L) arranged on the left side, and a second auxiliary wheel 125(R) arranged on the right side.

The task execution unit 130 is provided to perform a predetermined task. The task execution unit 120 is arranged at the body 110.

In one example, the task execution unit 130 may be provided to perform a task such as cleaning or lawn mowing. In another example, the task execution unit 130 may be provided to perform a task such as transferring an object or finding an object. In yet another embodiment, the task execution unit 130 may perform a security function such as sensing an intruder or a dangerous situation in the surroundings.

In this embodiment, the task execution unit 130 is described as mowing lawn, but there may be various types of task performed by the task execution unit 120 and not limited to this embodiment.

The task execution unit 130 may include the blade 131 which are rotatably provided to mow lawn. The task execution unit 130 may include a blade motor 132 which provides a rotation force for the blade 131.

The blade 131 are arranged between the driving wheel 121 and the auxiliary wheel 125. The blade 131 are arranged on a lower side of the body 110. The blade 131 are exposed from the lower side of the body 110. The blade 131 mows lawn by rotating about a rotation shaft which extends in an upward-downward direction.

A blade motor 132 may be arranged ahead of the first wheel 121(L) and the second wheel 121(R). The blade motor 132 is disposed in a lower side of the center in the inner space of the body 110.

The blade motor 132 may be disposed at the rear of the auxiliary wheel 125. The blade motor 132 may be arranged in a lower side of the body 110. A rotational force of the motor axis is transferred to the blade 131 using a structure such as a gear.

The moving robot 100 includes a battery (not shown) which provides power for the driving motor module 123. The battery provides power to the first driving motor 123(L). The battery provides power for the second driving motor 123(R). The battery may provide power for the blade motor 132. The battery may provide power for a controller 190, an azimuth angle sensor 176, and an output unit 165. The battery may be arranged in a lower side of the rear in the indoor space of the body 110.

The moving robot 100 is able to change a height of the blade 131 from the ground, and change a lawn cutting height. The moving robot 100 includes the height adjuster 156 by which a user is able to change a height of the blade 131. The height adjuster 156 may include a rotatable dial and may change the height of the blade 131 by rotating the dial.

The moving robot 100 includes the height indicator 157 which displays a degree of the height of the blade 131. When the height of the blade 131 is changed upon manipulation of the height adjuster 156, the height displayed by the height display 157 is also changed. For example, the height display 157 may display a height value of grass that is expected after the moving robot 100 mows lawn with the current height of the blade 131.

The moving robot 100 includes a docking insertion part 158 which is connected to a docking device 200 when the moving robot 100 is docked to the docking device 200. The docking insertion part 158 is recessed so that a docking connection part 210 of the docking device 200 is inserted into the docking insertion part 158. The docking insertion part 158 is arranged in the front surface of the body 110. Due to connection of the docking insertion part 158 and the docking connection part 210, the moving robot 100 may be guided to a correct position when charged.

The moving robot 100 may include a charging counterpart terminal 159 which is disposed at a position to contact a charging terminal 211, which will be described later, when the docking connection part 210 is inserted into the docking insertion part 158. The charging counterpart terminal 159 includes a pair of charging counterpart terminals which are disposed at positions corresponding to a pair of charging terminals 211 (211a, 211b). The pair of charging counterpart terminals 159a and 159b may be disposed on the left and right sides of the docking insertion part 158.

A terminal cover (not shown) for openably/closably covering the pair of charging terminals 211 (211a, 211b) may be provided. While the moving robot 100 travels, the terminal cover may cover the docking insertion part 158 and the pair of charging terminals 211 (211a, 211b). When the moving robot 100 is connected with the docking device 200, the terminal cover may be opened, and therefore, the docking insertion part 158 and the pair of charging terminals 211 (211a, 211b) may be exposed.

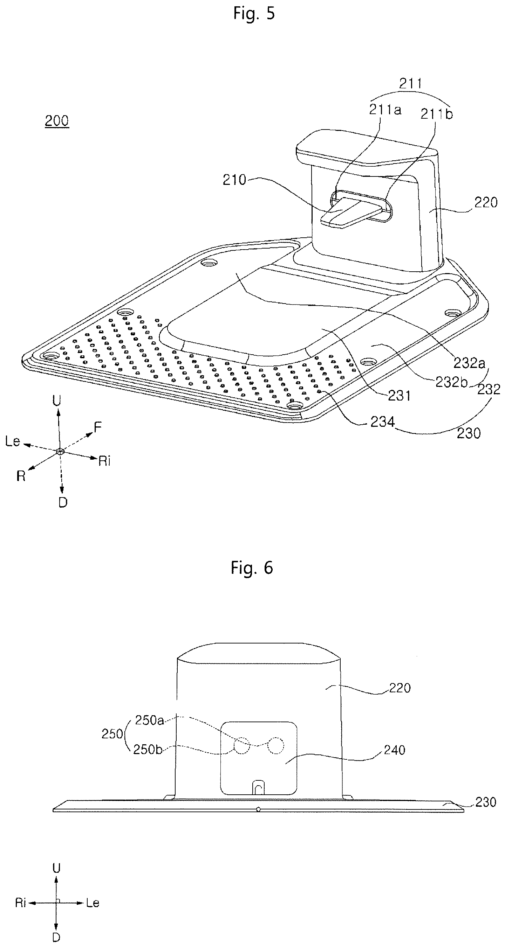

Meanwhile, referring to FIGS. 5 to 6, the docking device 200 includes a docking base 230 disposed at a floor, and a docking support 220 projected upwardly from the front of the docking base 230.

The docking base 230 defines a surface parallel to a horizontal direction. The docking base 230 is in a plate shape on which the moving robot 100 is able to be seated. The docking support 220 extends in a direction that crosses the horizontal direction on the docking base 230.

The docking device 200 includes the docking connection part 210 which is inserted into the docking insertion part 158 for charging of the moving robot 100. The docking connection part 210 may be projected rearward from the docking support 220.

The docking connection part 210 may be formed to have a vertical thickness smaller than a horizontal thickness. A horizontal width of the docking connection part 210 may be narrowed toward the rear. As viewed from above, the docking connection part 210 is broadly in a trapezoidal shape. The docking connection part 210 is vertically symmetrical. The rear of the docking connection part 210 forms a free end, and the front of the docking connection part 210 is fixed to the docking support 220. The rear of the docking connection part 210 may be formed in a round shape.

When the docking connection part 210 is fully inserted into the docking insertion part 158, charging of the moving robot 100 by the docking deice 200 may be performed.

The docking device 200 includes the charging terminal 211 to charge the moving robot 100. As the charging terminal 211 and the charging counterpart terminal 159 of the moving robot 100 are brought into contact with each other, charging power may be supplied from the docking device 200 to the moving robot 100.

The charging terminal 211 includes a contact surface facing rearward, and the charging counterpart terminal 159 includes a contact counterpart surface facing forward. As the contact surface of the charging terminal 211 is brought into contact with the contact counterpart surface of the charging counterpart terminal 159, power of the docking device 200 is connected with the moving robot 100.

The charging terminal 211 may include a pair of charging terminals 211 (211a, 211b) which form a positive polarity (+) and a negative polarity (-), respectively. The first charging terminal 211 (211a) is provided to come into contact with the first charging counterpart terminal 159a, and the second charging terminal 211 (211b) is provided to come into contact with the second charging counterpart terminal 159b.

The pair of charging terminals 211 (211a, 211b) may be arranged with the docking connection part 210 therebetween. The pair of charging terminals 211 (211a, 211b) may be arranged on the left and right sides of the docking connection part 210.

The docking base 230 includes a wheel guard 232 on which the driving wheel 121 and the auxiliary wheel 125 of the moving robot 100 are to be positioned. The wheel guard 232 includes a first wheel guard 232a which guides movement of the first auxiliary wheel 125(L), and a second wheel guard 232b which guides movement of the second auxiliary wheel 125(R). Between the first wheel guard 232a and the second wheel guard 232b, there is a central base 231 which is convex upwardly. The docking base 230 includes a slip prevention part 234 to prevent slipping of the first wheel 121(L) and the second wheel 121(R). The slip prevention part 234 may include a plurality of projections which are projected upwardly.

Meanwhile, a boundary wire 290 for setting a boundary of a travel area of the moving root 100 may be provided. The boundary wire 290 may generate a predetermined boundary signal. By detecting the boundary signal, the moving robot 100 is able to recognize the boundary of the travel area set by the boundary wire 290.

For example, as a predetermined current is allowed to flow along the boundary wire 290, a magnetic field may be generated around the boundary wire 290. The generated magnetic field is the aforementioned boundary signal. As an alternating current with a predetermined pattern of change are allowed to flow in the boundary wire 290, a magnetic field generated around the boundary wire 290 may change in the predetermined pattern of change. Using a boundary signal detector 177 for detecting a magnetic field, the moving robot 100 may recognize that the moving robot 100 has approached the boundary wire 290 within a predetermined range, and accordingly, the moving robot 100 may travel only in a travel area within a boundary set by the boundary wire 290.

The boundary wire 290 may generate a magnetic field in a direction that is distinguishable from a direction of a magnetic field generated by a reference wire 270. For example, the boundary wire 290 may be arranged substantially parallel to a horizontal plane. In this case, being substantially parallel may include an engineering understanding of a parallel state, which includes a certain level of error to a mathematically perfect parallel state.

The docking unit 200 may play a role of transferring a predetermined current to the boundary wire 290. The docking device 200 may include a wire terminal 250 connected to the boundary wire 290. Both ends of the boundary wire 290 may be connected to a first wire terminal 250a and a second wire terminal 250b. Through the connection between the boundary wire 290 and the wire terminal 250, a power supply of the docking device 200 may supply a current to the boundary wire 290.

The boundary wire 290 may include a first boundary wire 291 defining a boundary of a first travel area, and a second boundary wire 292 defining a boundary of a second travel area. That is, the entire area may be divided into two areas for a random homing travel route.

One end of the first boundary wire 291 and one end of the second boundary wire 292 may be connected to the first wire terminal, and the other end of the first boundary wire 291 and the other end of the second boundary wire 292 may be connected to the second wire terminal. Of course, the opposite case is possible.

The wire terminal 250 may be disposed at the front (F) of the docking device 200. That is, the wire terminal 250 may be disposed at a position opposite to a direction in which the docking connection part 210 is projected. The wire terminal 250 may be disposed in the docking support 220. The first wire terminal 250a and the second wire terminal 250b may be spaced apart in a left-right direction from each other.

The docking device 200 may include a wire terminal opening and closing door 240 which openably/closably covers the wire terminal 250. The wire terminal opening and closing door 240 may be disposed at the front (F) of the docking support 220. The wire terminal opening and closing door 240 may be hinge-coupled to the docking support 220 to be opened and closed by rotation.

Meanwhile, the reference wire 270 for allowing the moving robot 100 to recognize a position of the docking unit 200 may be provided. The reference wire 270 may generate a predetermined docking position signal. The moving robot 100 may recognize the position of the docking device 200 using the reference wire 270 by sensing the docking position signal, and may return back to the recognized position of the docking unit 200 in response to a return command or in response to the need of being charged. Such a position of the docking unit 200 may be a reference point for travelling of the moving robot 100.

The reference wire 270 is formed of a conductive material to allow a current to flow. The reference wire 270 may be connected to power of the docking unit 200 which will be described later.

For example, a predetermined current may be allowed to flow along the reference wire 270, so that a magnetic field is generated around the reference wire 270. The generated magnetic field is a reference magnetic field signal. As an alternating current with a predetermined pattern of change is allowed to flow in the reference wire 270, a magnetic field generated around the reference wire 270 may change with the predetermined pattern of change. Using the magnetic field signal detector 177 which senses the magnetic field, the moving robot 100 may recognize that it has approached the reference wire 270 within a predetermined range, and, in doing so, the moving robot 200 may be able to return back to the position of the docking unit 200 set by the reference wire 270.

The reference wire 270 may generate a magnetic field in a direction that is distinguishable from a direction of a magnetic field generated by the boundary wire 290. For example, the reference wire 270 may extend in a direction that crosses a horizontal direction. Preferably, the reference wire 270 may extend in an upward-downward direction that is orthogonal to the horizontal direction.

The reference wire 270 may be installed in the docking unit 200. The reference wire 270 may be disposed at various positions in the docking unit 200.

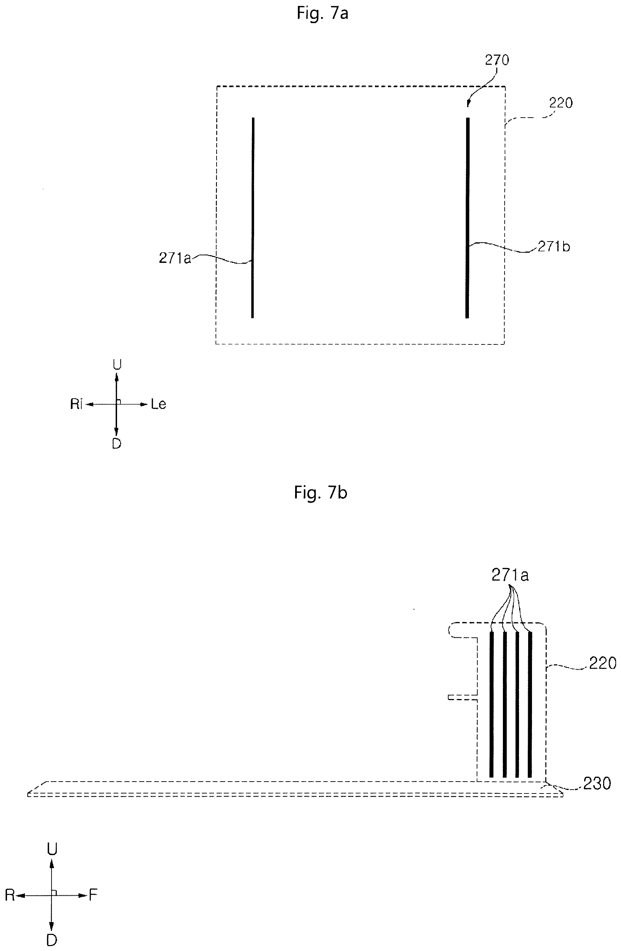

FIG. 7A is a rear view of a reference wire 270 and FIG. 7B is a side view of the reference wire 270.

Referring to FIGS, 6, 7A, and 7B, the reference wire 270 may be disposed inside the docking support 220. The reference wire 270 needs to generate a magnetic signal in a horizontal direction, and therefore, the reference wire 270 is arranged to extend in a vertical direction. If the reference wire 270 is disposed at the docking base 230, there is a problem that a thickness of the docking base 230 increases.

The reference wire 270 may include a vertical portion 271 that extends in a direction which crosses at least a horizontal direction. The vertical portion 271 may be disposed substantially parallel to an upward-downward direction UD. The vertical portion 271 may be formed in a round shape with a curvature while extending in a direction which crosses a horizontal plane.

A direction of a current input from the vertical portion 271 of the reference wire 270 may travel in an upward to downward direction or in a downward to upward direction.

The vertical portion 271 may be provided as a plurality of vertical portions to generate a magnetic field signal equal to or greater than a reference level from the entire area around the docking unit 200. For example, the vertical portion 271 may include a first vertical portion 271a, and a second vertical portion 271b spaced apart from the first vertical portion 271a. Of course, the vertical portion 271 may include just only one of the first vertical portion 271a and the second vertical portion 271b.

The first vertical portion 271a and the second vertical portion 271b are spaced apart in a left-right direction from each other. The first vertical portion 271a may be disposed adjacent to the right end of the docking support 220, and the second vertical portion 271b may be disposed adjacent to the left end of the docking support 220. If the first vertical portion 271a and the second vertical portion 271b are disposed adjacent to both ends of the docking support 220, an area in which a magnetic field is generated by the reference wire 270 may expand to maximum size around the docking unit 200.

A direction of travel of a current in the first vertical portion 271a and a direction of travel of a current in the second vertical portion 271b may be identical or different. Preferably, if a current flows from top to bottom in the first vertical portion 271a, a current may flow from bottom to top in the second vertical portion 271b.

In order to reinforce strength of magnetic fields generated by the first vertical portion 271a and the second vertical portion 271b, a plurality of first vertical portions 271a and a plurality of second vertical portions 271b may be provided. Each of the first vertical portion 271a and the second vertical portion 271b may be a set of multiple wires, and the first vertical portion 271a and the second vertical portion 271b may be in a uniform arrangement. Of course, each of the first vertical portion 271a and the second vertical portion 271b may be a single wire, respectively.

For example, a plurality of first vertical portions 271a may be arranged in columns along a line which extends in a front-rear direction, and a plurality of second vertical portions 271b may be arranged in columns along a line which extends in the front-rear direction.

If the plurality of first vertical portions 271a and the plurality of second vertical portions 271b are respectively arranged at the left ends and the right ends of the docking support 220 while being arranged to form columns in the front-rear direction, a charging terminal 211 and a docking connection part 210 may be arranged between the plurality of first vertical portions 271a and the plurality of second vertical portions 271b. If the charging terminal 211 and the docking connection part 210 are arranged between the plurality of first vertical portions 271a and the plurality of second vertical portions 271b, it is possible to arrange the reference wire 270 without changing configurations of the charging terminal 211 and the docking connection part 210.

The plurality of first vertical portions 271a and the plurality of second vertical portions 271b may be electrically connected to each other or may be supplied with electricity from an additional power supply. The docking unit 200 may play a role of transmitting a predetermined current to the reference wire 270. The docking unit 200 may include a wire terminal 250 connected to the reference wire 270. Both ends of the reference wire 270 may be connected to a first wire terminal 250a and a second wire terminal 250b. Through the connection between the reference wire 270 and the wire terminal 250, a power supply of the docking unit 200 may supply a current to the reference wire 270.

Specifically, both ends of the plurality of first vertical portions 271a are respectively connected to the first wire terminal 250a and the second wire terminal 250b, and both ends of the plurality of second vertical portions 271b may be respectively connected to the first wire terminal 250a and the second wire terminal 250b.

Of course, a reference wire 270 according to another embodiment may further include a horizontal portion (not shown). In this case, the reference wire 270 may be in a structure in which a first vertical portion 271a and a second vertical portion 271b are connected to each other to be supplied with power from a single power supply.

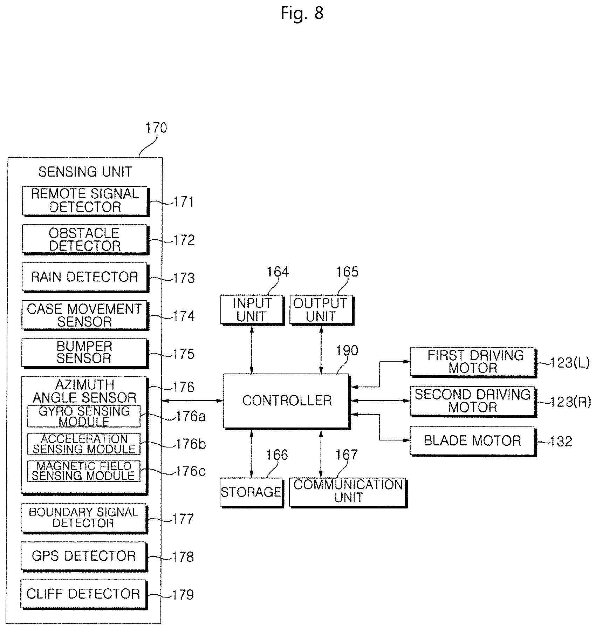

FIG. 8 is a block diagram illustrating a control relationship in the moving robot 100 shown in FIG. 1.

Meanwhile, referring to FIG. 8, the moving robot 100 may include the input unit 164 through which various instructions from a user is allowed to be input. The input unit 164 may include a button, a dial, a touch-type display, etc. The input unit 164 may include a microphone to recognize a voice. In this embodiment, a plurality of buttons is arranged in an upper side of the case 112.

The moving robot 100 may include the output unit 165 to output various types of information to a user. The output unit 165 may include a display module which displays visual information. The output unit 165 may include a speaker (not shown) which outputs audible information.

In this embodiment, the display module 165 outputs an image in an upward direction. The display module 165 is arranged in the upper side of the case 112. In one example, the display module 165 may include a thin film transistor Liquid-Crystal Display (LCD). In addition, the display module 165 may be implemented using various display panels such as a plasma display panel, an organic light emitting diode display panel, etc.

The moving robot 100 includes a storage 166 which stores various types of information. The storage 166 stores various types of information necessary to control the moving robot 100, and the storage 166 may include a volatile or non-volatile recording medium. The storage 166 may store information input through the input unit 164 or information received through a communication unit 167. The storage 166 may store a program required to control the moving robot 100.

The moving robot 100 may include the communication unit 167 to communicate with an external device (a terminal and the like), a server, a router, etc. For example, the communication unit 167 may be capable of performing wireless communication with a wireless communication technology such as IEEE 802.11 WLAN, IEEE 802.15 WPAN, UWB, Wi-Fi, Zigbee, Z-wave, Blue-Tooth, etc. The communication unit 167 may differ depending on a target device to communication or a communication method of a server.

The moving robot 100 includes a sensing unit 170 which senses a state of the moving robot 100 or information relating to an environment external to the moving robot 100. The sensing unit 170 may include at least one of a remote signal detector 171, an obstacle detector 172, a rain detector 173, a case movement sensor 174, a bumper sensor 175, an azimuth angle sensor 176, a boundary signal detector 177, a Global Positioning System (GPS) detector 178, or a cliff detector 179.

The remote signal detector 171 receives an external remote signal. Once a remote signal from an external remote controller is transmitted, the remote signal detector 171 may receive the remote signal. For example, the remote signal may be an infrared signal. The signal received by the remote signal detector 171 may be processed by a controller 190.

A plurality of remote signal detectors 171 may be provided. The plurality of remote signal detectors 171 may include a first remote signal detector 171a disposed at the front of the body 110, and a second remote signal detector 171b disposed at the rear of the body 110. The first remote signal detector 171a receives a remote signal transmitted from the front. The second remote signal detector 171b receives a remote signal transmitted from the rear.

The obstacle detector 172 senses an obstacle around the moving robot 100. The obstacle detector 172 may sense an obstacle in the front. A plurality of obstacle detectors 172a, 172b, and 172c may be provided. The obstacle detector 172 is disposed at a front surface of the body 110. The obstacle detector 172 is disposed higher than the frame 111. The obstacle detector 172 may include an infrared sensor, an ultrasonic sensor, a Radio Frequency (RF) sensor, a geomagnetic sensor, a Position Sensitive Device (PSD) sensor, etc.

The rain detector 173 senses rain when it rains in an environment where the moving robot 100 is placed. The rain detector 173 may be disposed in the case 112.

The case movement sensor 174 senses movement of the case connection part. If the case 112 is lifted upward from the frame 111, the case connection part moves upward and accordingly the case movement sensor 174 senses the lifted state of the case 112. If the case movement sensor 174 senses the lifted state of the case 112, the controller 190 may perform a control action to stop operation of the blade 131. For example, if a user lifts the case 112 or if a considerable-sized obstacle underneath lifts the case 112, the case movement sensor 174 may sense the lift.

The bumper sensor 175 may sense rotation of the movable fixing part. For example, a magnet may be disposed in one side of the bottom of the movable fixing part, and a sensor for sensing a change in a magnetic field of the magnet may be disposed in the frame. When the movable fixing part rotates, the bumper sensor 175 senses a change in the magnetic field of the magnet. Thus, the bumper sensor 175 capable of sensing rotation of the movable fixing part may be implemented. When the bumper 112b collides with an external obstacle, the movable fixing part rotates integrally with the bumper 112b. As the bumper sensor 175 senses the rotation of the movable fixing part, the bumper sensor 175 may sense the collision of the bumper 112b.

The sensing unit 170 includes a tilt information acquisition unit 180 which acquires tilt information on a tilt of a traveling surface (S). By sensing a tilt of the body 110, the tilt information acquisition unit 180 may acquire the tilt information on inclination of the traveling surface (S) on which the body 110 is placed. In one example, the tilt information acquisition unit 180 may include a gyro sensing module 176a. The tilt information acquisition unit 180 may include a processing module (not shown) which converts a sensing signal from the gyro sensing module 176a into the tilt information. The processing module may be implemented as an algorithm or a program which is part of the controller 190. In another example, the tilt information acquisition unit 180 may include a magnetic field sensing module 176c, and acquire the tilt information based on sensing information about the magnetic field of the Earth.

The gyro sensing module 176a may acquire information on a rotational angular speed relative of the body 110 to the horizontal plane. Specifically, the gyro sensing module 176a may sense a rotational angular speed which is parallel to the horizontal plane about the X and Y axes orthogonal to each other. By merging a rotational angular speed (roll) about the X axis and a rotational angular speed (pitch) about the Y axis with the processing module, it is possible to calculate a rotational angular speed relative to the horizontal plane. By integrating the rotational angular speed relative to the horizontal plane, it is possible calculate a tilt value.

The gyro sensing module 176a may sense a predetermined reference direction. The tilt information acquisition unit 180 may acquire the tilt information based on the reference direction.

The azimuth angle sensor (AHRS) 176 may have a gyro sensing function. The azimuth angle sensor 176 may further include an acceleration sensing function. The azimuth angle sensor 176 may further include a magnetic field sensing function.

The azimuth angle sensor 176 may include a gyro sensing module 176a which performs gyro sensing. The gyro sensing module 176a may sense a horizontal rotational speed of the body 110. The gyro sensing module 176a may sense a tilting speed of the body 110 relative to a horizontal plane.

The gyro sensing module 176a may include a gyro sensing function regarding three axes orthogonal to each other in a spatial coordinate system. Information collected by the gyro sensing module 176a may be roll, pitch, and yaw information. The processing module may calculate a direction angle of a cleaner 1 or 1' by integrating the roll, pitch, and yaw angular speeds.

The azimuth angle sensor 176 may include an acceleration sensing module 176b which senses acceleration. The acceleration sensing module 176b has an acceleration sensing function regarding three axes orthogonal to each other in a spatial coordinate system. A predetermined processing module calculates a speed by integrating the acceleration, and may calculate a movement distance by integrating the speed.

The azimuth angle sensor 176 may include a magnetic field sensing module 176c which performs magnetic field sensing. The magnetic sensing module 176c may have a magnetic field sensing function regarding three axes orthogonal to each other in a spatial coordinate system. The magnetic field sensing module 176c may sense the magnetic field of the Earth.

The boundary signal detector 177 detects a boundary signal from the boundary wire 290 and/or a docking position signal from the reference wire 270. In addition, the boundary signal detector 177 detects a proximity boundary signal generated in a proximity boundary area 295 in which a portion of a first travel area A1 and a portion of a second travel area A2 are proximal to each other.

The boundary signal detector 177 may be disposed at the front of the body 110. In doing so, while the moving robot 100 moves in a forward direction which is the primary travel direction, it is possible to sense the boundary of the travel area in advance. The boundary signal detector 177 may be disposed in an inner space of the bumper 112b.

The boundary signal detector 177 may include a first boundary signal detector 177a and a second boundary signal detector 177b which are arranged leftward and rightward from each other. The first boundary signal detector 177a and the second boundary signal detector 177b may be disposed at the front of the body 110.

For example, the boundary signal detector 177 includes a magnetic field sensor. The boundary signal detector 177 may be implemented using a coil to detect a change in a magnetic field. The boundary signal detector 177 may sense at least a horizontal magnetic field. The boundary signal detector 177 may sense a magnetic field on three axes which are spatially orthogonal to each other.

Specifically, the first boundary signal detector 177a may detect a magnetic signal of a direction that is orthogonal to the second boundary signal detector 177b. The first boundary signal detector 177a and the second boundary signal detector 177b may detect magnetic field signals of directions orthogonal to each other, and detect a magnetic field on three axes spatially orthogonal to each other by combining values of the detected magnetic field signals.

When detecting the magnetic field on the three axes spatially orthogonal to each other, the boundary signal detector 177 may determine a direction of the magnetic field using a resultant vector of three axes, and, in this case, the boundary signal detector 177 may recognize a docking position signal if the direction of the magnetic field is close to a horizontal direction, while recognizing a boundary signal if the direction of the magnetic field is close to a vertical direction.

In addition, the boundary signal detector 177 may distinguish the proximity boundary signal and boundary signals of the first travel area A1 and the second travel area A2 based on a difference in strength of magnetic fields, and distinguish the proximity boundary signal and the docking position signal based on a difference in direction of magnetic fields. Specifically, if currents are applied in the same direction when a first boundary wire 291 of the first travel area A1 and a second boundary wire 292 of the second travel area A2 partially or entirely overlap each other, a magnetic field with strength much greater than strength of a magnetic field generated in each of the first boundary wire 291 and the second boundary wire 292 may be generated, and accordingly, it is possible to distinguish each signal based on a level of strength of a magnetic field

In another example, the boundary signal detector 177 may distinguish the proximity boundary signal and the boundary signals of the first travel area A1 and the second travel area A2 based on a difference in distribution of magnetic fields. Specifically, if currents are applied in the same direction or in different directions when the first boundary wire 291 of the first travel area A1 and the second boundary wire 292 of the second travel area A2 are arranged within a certain range, the boundary signal detector 177 may recognize a proximity boundary signal by detecting multiple peaks of a magnetic field strength within a predetermined range in the horizontal coordinate system.

The GPS detector 178 may be provided to detect a GPS signal. The GPS detector 178 may be implemented using a Printed Circuit Board (PCB).

The cliff detector 179 detects presence of a cliff in a travel surface. The cliff detector 179 may be disposed at the front of the body 110 to detect presence of a cliff in the front of the moving robot 100.

The sensing unit 170 may include an opening/closing detector (not shown) which detects opening/closing of at least one of the first opening and closing door 117 or the second opening and closing door 118. The opening/closing detector may be disposed at the case 112.

The moving robot 100 includes the controller 190 which controls autonomous traveling. The controller 190 may process a signal from the sensing unit 170. The controller 190 may process a signal from the input unit 164.

The controller 190 may control the first driving motor 123(L) and the second driving motor 123(R). The controller 190 may control driving of the blade motor 132. The controller 190 may control outputting of the output unit 165.

The controller 190 includes a main board (not shown) which is disposed in the inner space of the body 110. The main board means a PCB.

The controller 190 may control autonomous traveling of the moving robot 100. The controller 190 may control driving of the traveling unit 120 based on a signal received from the input unit 164. The controller 190 may control driving of the traveling unit 120 based on a signal received from the sensing unit 170.

In addition, the controller 190 may process a signal from the boundary signal detector 177. Specifically, when the boundary signal detector 177 detects a docking position signal, the controller 190 may set a position at which the docking position signal is detected as a reference point. If a return command for return back to the reference point determined by the docking position signal is received, the controller 190 may control the moving robot to travel to the reference point.

In addition, when the boundary signal detector 177 detects a boundary signal, the controller 190 may set a position at which the boundary signal is detected as a boundary of a travel area. The controller 190 may control the moving robot 100 to travel within the boundary of the travel area.

In addition, when the boundary signal detector 177 detects a proximity boundary signal, the controller 190 may set a position at which the proximity boundary signal is detected as the proximity boundary area 295. The controller 190 may control the moving robot 100 to return along the proximity boundary area 295.

In addition, the controller 190 may define the proximity boundary line 296 based on the proximity boundary signal, and control the travelling unit to perform a homing travel. The homing travel and the proximity boundary line 296 will be described later.

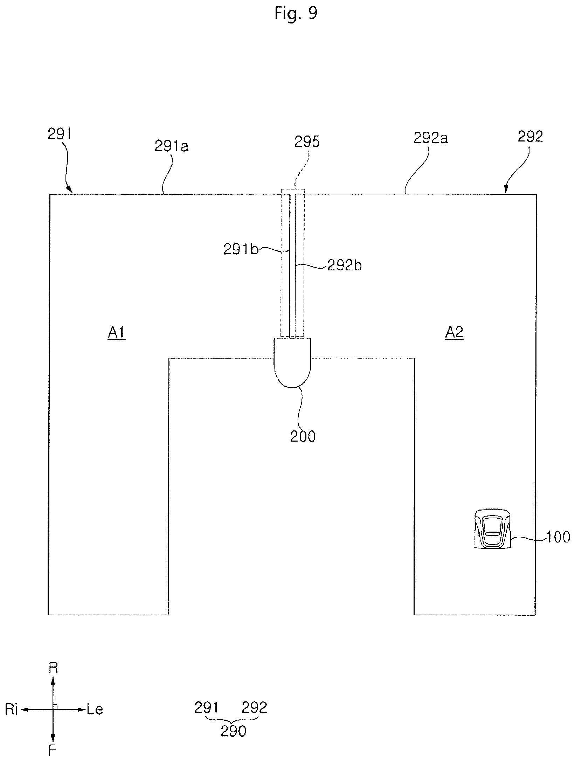

FIG. 9 is a diagram illustrating a system of the moving robot 100 according to an embodiment of the present invention.

Referring to FIG. 9, the system of the moving robot 100 of the present invention includes: the first boundary wire 291 and the second boundary wire 292 which define the first travel area A1 and the second travel area A2, respectively; and the moving robot 100 which travels in a travel area. In addition, the system of the moving robot 100 of the present invention may further include a docking unit 200 with which the moving robot 100 is docked to be charged.

Two boundary wires 290 each defining a boundary of a travel area are arranged, so the entire travel area is divided into the first travel area A1 and the second travel area A2. The first travel area A1 and the second travel area A2 define a closed area in a horizontal plane with the docking unit 200.

The proximity boundary area 295 may be defined as an area in which part of the first boundary wire 291 and part of the second boundary wire 292 are located within a predetermined range, or as an area which has expanded by a predetermined size outwardly from the area in which part of the first boundary wire 291 and part of the second boundary wire 292 are located within a predetermined range. Part of the first boundary wire 291 which is proximal to the second boundary wire 292 within the predetermined range may be defined as a first proximal portion 291b, and the rest part of the first boundary wire 291 excluding the first proximal portion 291b may be defined a first distal portion 291a. In addition, part of the second boundary wire 292 which is proximal to the first boundary wire 291 within the predetermined range may be defined as a second proximal portion 292b, and the rest part of the second boundary wire 292 excluding the second proximal portion 292b may be defined as a second distal portion 292a.

The first distal portion 291a of the first boundary wire 291 and the second space portion 292a of the second boundary wire 292 define an entire travel area. In this embodiment, the first travel area A1 and the second travel area A2 do not overlap each other. There is no limitation on a distance between the first proximal portion 291b and the second proximal portion 292b, but it is desirably between 0m and 2m.

Of course, the first boundary wire 291 and the second boundary wire 292 may be arranged to overlap at least partially in the proximity boundary area 295. Specifically, the first proximal portion 291b and the second proximal portion 292b may partially or entirely overlap.

The first boundary wire 291 and the second boundary wire 292 may be arranged parallel to each other in the proximity boundary area 295. Specifically, the first proximal portion 291b and the second proximal portion 292b may be arranged in a straight-line form to be parallel to each other, and a distance between the first proximal portion 291b and the second proximal portion 292b may be predetermined.

One end of the proximity boundary area 295 may be arranged proximal to the docking unit 200. Specifically, the proximity boundary area 295 may be arranged on an arbitrary line which connects the docking unit 200 to a point on a boundary facing the docking unit 200 and spaced apart the shorted distance from the docking unit 200 in an entire travel area.

More specifically, one end of the first proximal portion 291b is connected to the docking unit 200, the other end of the first proximity portion 291b is connected to one end of the first distal portion 291a, and the other end of the first distal portion 291a is connected to the docking unit 200. One end of the second proximity portion 292b is connected to the docking unit 200, the other end of the second proximal portion 292b is connected to one end of the second distal portion 292a, and the other end of the second distal portion 292a is connected to the docking unit 220.

When the moving robot 100 travels to perform a task, the controller 190 controls the travelling unit to move between the first travel area A1 and the second travel area A2, regardless of the proximity boundary area 295.

Hereinafter, a travel for homing by the moving robot 100 in the proximity boundary area 295 will be described.

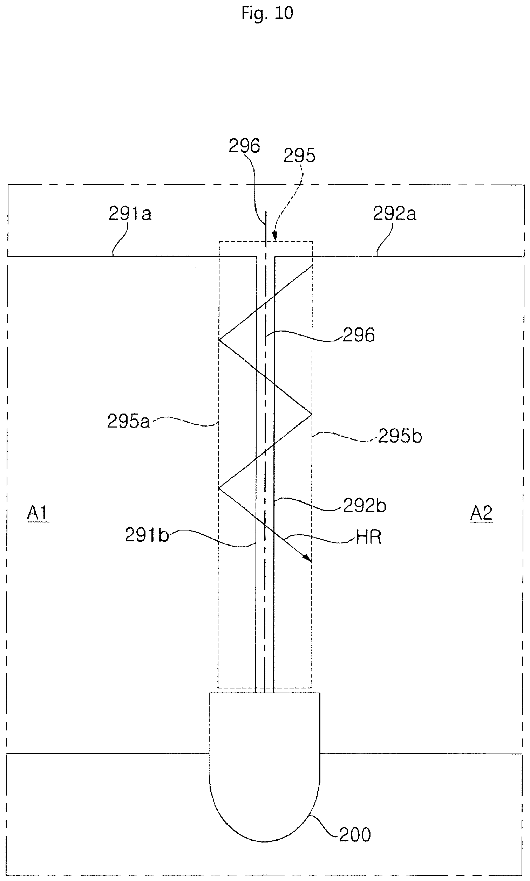

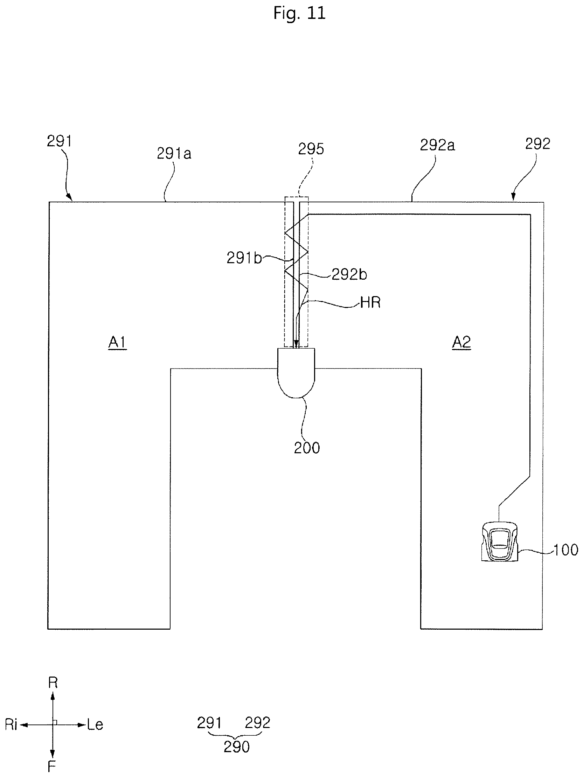

FIG. 10 is a zoomed-in view of part of the system of the moving robot 100 shown in FIG. 9, and FIG. 11 is a diagram illustrating a homing travel route HR of the moving robot 100 according to an embodiment of the present invention.

Referring to FIGS. 10 and 11, the controller 190 defines the proximity boundary line 296 based on a proximity boundary signal, and controls the travelling unit to perform a homing travel so that the body travels along a proximity boundary line 296. The controller 190 defines the proximity boundary line 296, which is a reference line for travelling of the moving robot 100, based on distribution of a magnetic field which is a proximity boundary signal received from the boundary signal detector 177. In addition, a travel of the moving robot 100 in accordance with a proximity boundary signal means that the moving robot 100 travels along the proximity boundary line 296.

For example, if currents are applied in the same direction when the first boundary wire 291 of the first travel area A1 and the second boundary wire 292 of the second travel area A2 overlap at least partially or entirely, a magnetic field with strength greater than strength of a magnetic field generated in each of the first boundary wire 291 and the second boundary wire 292 is generated, and therefore, it is possible to distinguish each signal based on a difference in strength of magnetic fields. In this case, the proximity boundary line 296 may be defined as a virtual line that connects peaks of a magnetic field with strength greater than a predetermined magnetic field strength. In other words, if the first boundary wire 291 and the second boundary wire 292 overlap each other, the first boundary wire 291 may be set as the proximity boundary line 296.

In another example, when the first boundary wire 291 of the first travel area A1 and the second boundary wire 292 of the second travel area A2 are arranged within a predetermined range without overlapping each other, there are two or more peaks in distribution of magnetic fields generated by the first boundary wire 291 and the second boundary wire 292, and thus, it is possible to distinguish a boundary signal and a proximity boundary signal based on the number of peaks in distribution of the magnetic fields.

In this case, the proximity boundary line 296 may be defined as a virtual line that connects center points between multiple peaks in distribution of magnetic fields. In other words, the proximity boundary line may be set as a line that connect center points of the first distal portion 291a and the second distal portion 292a.

A homing travel means a travel of the moving robot 100 to return back to the docking unit 200. The controller 190 may perform the homing travel upon receiving a homing signal. Of course, when a remaining battery power of the moving robot is equal to or lower than a predetermined level, the controller 190 may perform the homing travel.

When the moving robot repeatedly travels along the proximity boundary line 296 during the homing travel in the proximity boundary area 295, pits are made on the ground due to the repeated travel, and thus, the moving robot 100 may travel in a random travel route while travelling along the proximity boundary line 296 in the proximity boundary area 295.

Specifically, the controller 190 may control the travelling unit such that, during the homing travel, the body converts a direction of travel a random number of times in a homing travel area which is set about the proximity boundary line 296. In this case, the homing travel area may be defined as a closed area that is centered about the proximity boundary line 296. More specifically, the homing travel area may be defined as an area between a first homing boundary line 295a and a second homing boundary line 295b which are parallel to the proximity boundary line 296 positioned therebetween.

As converting a direction a random number of times in the homing travel area, the moving robot moves along the proximity boundary line 296 in a direction distal from the first distal portion 291a and the second distal portion 292a, and thus, the ground is less likely to be damaged during the homing travel.

If the moving robot 100 converts a direction in the homing travel area a random number of times, part of the homing travel route of the moving robot 100 may become too long. Thus, during the homing travel, the moving robot 100 may travel in zig-zag fashion within the proximity boundary area 295.

Specifically, the controller 190 may control the traveling unit such that, during the homing travel, the body travels along a homing travel route HR which crosses the proximity boundary line 296 a random number of times. In addition, the controller 190 may control the travelling unit such that, during the homing travel, the body converts a direction of travel at the first and second homing boundary lines 295a, 295b to travel in a direction which crosses the proximity boundary line 296. Of course, whenever traveling for homing, the controller 290 may randomly set the number of times to convert a direction of travel on the first and second homing boundary lines 295a, 295b.

In addition, the controller 190 may control the travelling unit such that, during the homing travel, the body enters the first travel area A1 and the second travel area A2, alternatively.

When a proximity boundary signal is not detected at a time of receiving a homing signal, the controller 190 may control the travelling unit so that the body travels in accordance with a boundary signal of the first travel area A1 or a boundary signal of the second travel area A2, and, if a docking position signal is detected during the homing travel, the controller 190 may control the travelling unit so that the body performs docking travel.

Specifically, if a proximity boundary signal is not detected, the moving robot 100 first detects a boundary signal within a variable distance to travel along the first distal portion 291a of the first boundary wire 291 or the second distal portion 292a of the second boundary wire 292. If the moving robot 100 detects a proximity boundary signal while travelling along the first distal portion 291a of the first boundary wire 291 or the second distal portion 292a of the second boundary wire 292, the moving robot may travel in accordance with the proximity boundary signal, and, if a docking position signal is detected, the moving robot 100 may control the travelling unit so that the body performs docking travel. The docking travel is a travel for docking of the moving robot 100 to the docking unit.

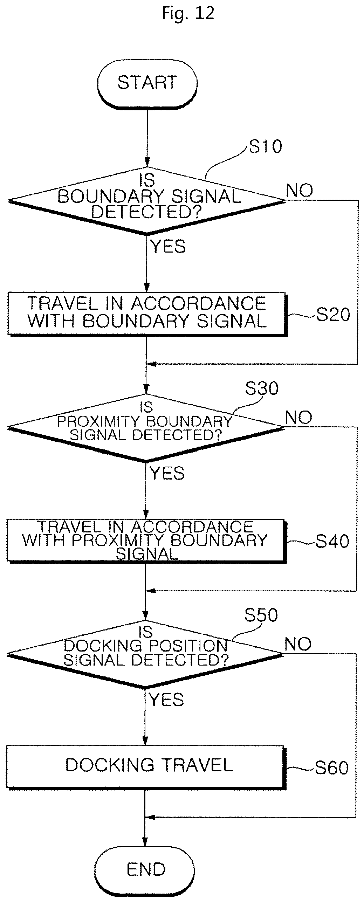

FIG. 12 is a flowchart illustrating a control method of the moving robot 100 according to an embodiment of the present invention.

Referring to FIG. 12, the control method of the moving robot 100 according to an embodiment of the present invention starts off by detecting a boundary signal. When detecting a user's homing command or a lack of remaining battery power of the moving robot 100, the moving robot 100 may start a homing travel mode. In the homing travel mode, the boundary signal detector 177 detects a boundary signal (S10). When the boundary signal is detected, the moving robot 100 travels in accordance with the boundary signal (S20). When the boundary signal is not detected, the moving robot may detect a proximity boundary signal or a docking position signal.

Next, the boundary signal detector 177 detects a proximity boundary signal (S30). When the proximity boundary signal is detected, the moving robot 100 travels in accordance with the proximity boundary signal (S40). As described above, the moving robot 100 may travel along a random route when traveling in accordance with the proximity boundary signal.

Next, the boundary signal detector 177 detects a docking position signal. When the docking position signal is detected, the moving robot 100 performs docking travel (S20).

Of course, in some embodiments, the order of detecting a boundary signal, a proximity boundary signal, and a docking position signal may be changed. If docked to the docking unit 200, the moving robot 100 terminates the homing travel mode, regardless of the above order.

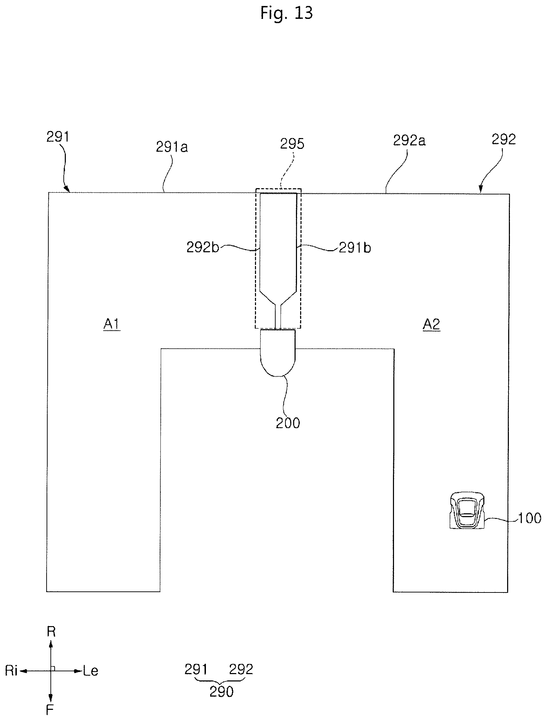

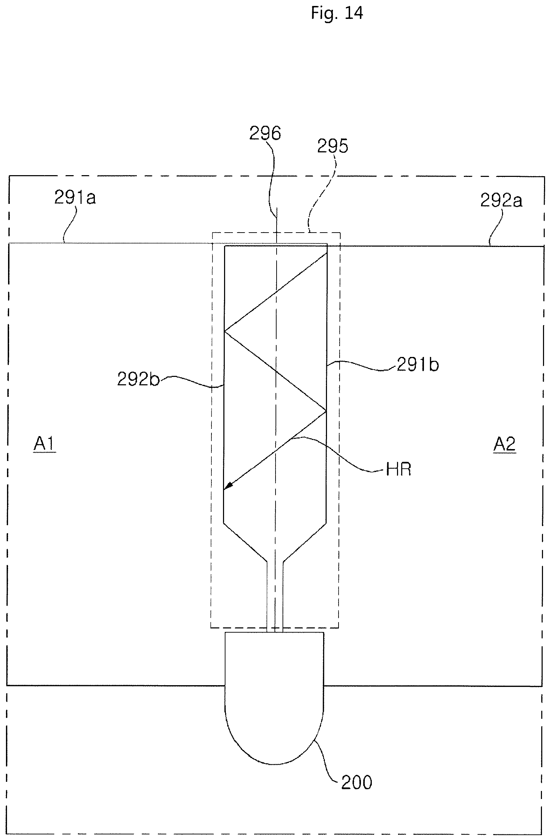

FIG. 13 is a diagram illustrating a system of a moving robot 100 according to another embodiment of the present invention, and FIG. 14 is a diagram illustrating a zoomed-in version of part of the system of the moving robot 100 shown in FIG. 13 and a homing travel route HR.

Referring to FIGS. 13 and 14, the first boundary wire 291 and the second boundary wire 292 crosses each other in the proximity boundary area 295, as opposed in the embodiment of FIG. 9. The following description is mainly about the difference from the embodiment of FIG. 9.

Specifically, the first proximal portion 291b of the first boundary wire 291 and the second proximal portion 292b of the second boundary wire 292 cross each other, and thus, part of the first travel area A1 and part of the second travel area A2 may overlap.

According to the above solution, the present invention has advantages that a moving robot is capable of recognizing easily and accurately recognizing a position of a charging station, that a driving time of the moving robot increases because a route for the moving robot to return back to the charging station is not uniformly formed along a boundary, and that it is possible to prevent pits from being formed on the ground due to repeated movement of the moving robot.

In addition, recognizing the position of the charging station, recognizing a boundary of a travel area, and recognizing a proximity boundary area are possible with only one sensor using a magnetic field signal. The position of the charging station and the boundary may be identified based on a difference in direction, distribution, or strength between magnetic fields. As the moving robot is capable of recognizing a homing travel route, it is possible to reduce manufacturing costs and reduce a control burden on a controller.

In addition, the present disclosure proposes addition of a simple component, such as arrangement of a conductive wire inside a docking unit, and therefore, it is possible to reduce manufacturing costs, to share a boundary wire which constitutes a boundary, and to be driven together with the order wire using one power supply.

In addition, because the conductive wire is disposed inside a docking support which vertically extends, the present invention has an advantage that it is not necessary to change configuration of the docking unit in order to arrange the conductive wire.

## Claims

1. A moving robot system comprising:
a first boundary wire (291) and a second boundary wire (292) respectively defining a first travel area (A1) and a second travel area (A2); and
a moving robot (100) which comprises a body (110) defining an exterior, a travelling unit (120) configured to move the body (110), a boundary signal detector (177) configured to detect a proximity boundary signal generated in a proximity boundary area (295) in which a portion of the first travel area (A1) and a portion of the second travel area (A2) are proximal to each other, and a controller (190) configured to define a proximity boundary line (296) based on the proximity boundary signal and control the travelling unit (120) such that the body (110) performs a homing travel which indicates travelling along the proximity boundary line (296),
**characterized in that** the controller (190) is configured to:
define a first homing boundary line (295a) and a second homing boundary line (295b) which are parallel to the proximity boundary line (296) positioned therebetween; and
control the travelling unit (120) such that, during the homing travel, the body (110) converts a direction of travel on the first and second homing boundary lines (295a, 295b) and travels in a direction of travel which crosses the proximity boundary line (296).

2. The robot system of claim 1, wherein the first boundary wire (291) and the second boundary wire (292) cross each other within the proximity boundary area (295).

3. The moving robot system of claim 1, wherein the first boundary wire (291) and the second boundary wire (292) are arranged parallel to each other within the proximity boundary area (295).

4. The moving robot system of claim 1, wherein the first boundary wire (291) and the second boundary wire (292) at least partially overlap each other within the proximity boundary area (295).

5. The moving robot system of any one of claims 1 to 4, further comprising a docking unit (200) to which the moving robot (100) is docked for recharging,
wherein one end of the proximity boundary area (295) is arranged proximal to the docking unit (200).

6. The moving robot system of claim 5,
wherein the docking unit (200) further comprises a first wire terminal (250a) and a second wire terminal (250b) which are connected to a power supply, and
wherein one end of the first boundary wire (291) and one end of the second boundary wire (292) are connected to the first wire terminal (250a), and the other end of the first boundary wire (291) and the other end of the second boundary wire (292) are connected to the second wire terminal (250b).

7. The moving robot system of any one of claims 1 to 6, wherein the controller (190) is further configured to control the travelling unit (120) such that, during the moving travel, the body (110) travels along a homing travel route which crosses the proximity boundary line (296) a random number of times.

8. The moving robot system of any one of claims 5 to 7, wherein the docking unit (200) further comprises a reference wire (270) which extends in an upward-downward direction crossing the boundary wires (291, 292), and which generates a docking position signal.

9. The moving robot system of any one of claims 1 to 8, wherein the proximity boundary area (295) is defined as an area in which a part of the first boundary wire (291) and a part of the second boundary wire (292) are located within a predetermined range.

10. The moving robot of any one of claims 1 to 9, wherein the controller (190) is further configured to perform the homing travel upon receiving a homing signal.

11. The moving robot of any one of claims 1 to 10, wherein the controller (190) is further configured to control the travelling unit (120) such that, during the homing travel, the body (110) converts a direction of travel a random number of times within a homing travel area which is set about the proximity boundary line (296).

12. The moving robot of any one of claims 1 to 11, wherein the controller (190) is configured to control the travelling unit (102) such that, during the homing travel, the body enters the first travel area (A1) and the second travel area (A2), alternatively.

13. The moving robot of claim 1, wherein the boundary signal detector (177) comprises a magnetic field sensor.

14. The moving robot of claim 13, wherein the boundary signal detector (177) is configured to distinguish the proximity boundary signal and boundary signals of the first travel area (A1) and the second travel (A2) area based on a difference in strength of magnetic fields.

## Patentansprüche

1. Bewegliches Robotersystem mit:
einem ersten Begrenzungsdraht (291) und einem zweiten Begrenzungsdraht (292), die jeweils einen ersten Fahrbereich (A1) und einen zweiten Fahrbereich (A2) definieren; und
einem beweglichen Roboter (100), der einen Körper (110), der ein Äußeres definiert, eine Fahreinheit (120), die konfiguriert ist, den Körper (110) zu bewegen, einen Begrenzungssignaldetektor (177), der konfiguriert ist, ein Näherungsbegrenzungssignal zu erfassen, das in einem Näherungsbegrenzungsbereich (295) erzeugt wird, in dem ein Abschnitt des ersten Fahrbereichs (A1) und ein Abschnitt des zweiten Fahrbereichs (A2) nahe beieinander sind, und eine Steuereinheit (190) aufweist, die konfiguriert ist, beruhend auf dem Näherungsbegrenzungssignal eine Näherungsbegrenzungslinie (296) zu definieren und die Fahreinheit (120) so zu steuern, dass der Körper (110) eine Zielsuchfahrt durchführt, die das Fahren längs der Näherungsbegrenzungslinie (296) angibt,
**dadurch gekennzeichnet, dass** die Steuereinheit (190) konfiguriert ist:
eine erste Zielsuchbegrenzungslinie (295a) und eine zweite Zielsuchbegrenzungslinie (295b) zu definieren, die parallel zur dazwischen angeordneten Näherungsbegrenzungslinie (296) sind; und
die Fahreinheit (120) so zu steuern, dass der Körper (110) während der Zielsuchfahrt eine Fahrrichtung an der ersten und zweiten Zielsuchbegrenzungslinie (295a, 295b) umstellt und in einer Fahrrichtung fährt, die die Näherungsbegrenzungslinie (296) kreuzt.

2. Robotersystem nach Anspruch 1, wobei sich der erste Begrenzungsdraht (291) und der zweite Begrenzungsdraht (292) innerhalb des Näherungsbegrenzungsbereichs (295) kreuzen.

3. Bewegliches Robotersystem nach Anspruch 1, wobei der erste Begrenzungsdraht (291) und der zweite Begrenzungsdraht (292) innerhalb des Näherungsbegrenzungsbereichs (295) parallel zueinander angeordnet sind.

4. Bewegliches Robotersystem nach Anspruch 1, wobei sich der erste Begrenzungsdraht (291) und der zweite Begrenzungsdraht (292) innerhalb des Näherungsbegrenzungsbereichs (295) mindestens teilweise überlappen.

5. Bewegliches Robotersystem nach einem der Ansprüche 1 bis 4, das ferner eine Andockstation (200) aufweist, an die der bewegliche Roboter (100) zum Wiederaufladen angedockt wird,
wobei ein Ende des Näherungsbegrenzungsbereichs (295) nahe der Andockstation (200) angeordnet ist.

6. Bewegliches Robotersystem nach Anspruch 5, wobei die Andockstation (200) ferner einen ersten Drahtanschluss (250a) und einen zweiten Drahtanschluss (250b) aufweist, die mit einer Stromversorgung verbunden sind, und
wobei ein Ende des ersten Begrenzungsdrahts (291) und ein Ende des zweiten Begrenzungsdrahts (292) mit dem ersten Drahtanschluss (250a) verbunden sind, und das andere Ende des ersten Begrenzungsdrahts (291) und das andere Ende des zweiten Begrenzungsdrahts (292) mit dem zweiten Drahtanschluss (250b) verbunden sind.

7. Bewegliches Robotersystem nach einem der Ansprüche 1 bis 6, wobei die Steuereinheit (190) ferner konfiguriert ist, die Fahreinheit (120) so zu steuern, dass während der Bewegungsfahrt der Körper (110) längs einer Zielsuchfahrtroute fährt, die die Näherungsbegrenzungslinie (296) eine zufällige Anzahl von Malen kreuzt.

8. Bewegliches Robotersystem nach einem der Ansprüche 5 bis 7, wobei die Andockstation (200) ferner einen Referenzdraht (270) aufweist, der sich in einer Aufwärts-AbwärtsRichtung erstreckt, die die Begrenzungsdrähte (291, 292) kreuzt, und der ein Andockpositionssignal erzeugt.

9. Bewegliches Robotersystem nach einem der Ansprüche 1 bis 8, wobei der Näherungsbegrenzungsbereich (295) als ein Bereich definiert ist, in dem sich ein Teil des ersten Begrenzungsdrahts (291) und ein Teil des zweiten Begrenzungsdrahts (292) innerhalb einer vorgegebenen Entfernung befinden.

10. Beweglicher Roboter nach einem der Ansprüche 1 bis 9, wobei die Steuereinheit (190) ferner konfiguriert ist, die Zielsuchfahrt beim Empfangen eines Zielsuchsignals durchzuführen.

11. Beweglicher Roboter nach einem der Ansprüche 1 bis 10, wobei die Steuereinheit (190) ferner konfiguriert ist, die Fahreinheit (120) so zu steuern, dass der Körper (110) während der Zielsuchfahrt eine Fahrrichtung eine zufällige Anzahl von Malen innerhalb eines Zielsuchfahrbereichs umstellt, der um die Näherungsbegrenzungslinie (296) eingestellt wird.

12. Beweglicher Roboter nach einem der Ansprüche 1 bis 11, wobei die Steuereinheit (190) konfiguriert ist, die Fahreinheit (120) so zu steuern, dass der Körper während der Zielsuchfahrt abwechselnd in den ersten Fahrbereich (A1) und den zweiten Fahrbereich (A2) eintritt.

13. Beweglicher Roboter nach Anspruch 1, wobei der Begrenzungssignaldetektor (177) einen Magnetfeldsensor aufweist.

14. Beweglicher Roboter nach Anspruch 13, wobei der Begrenzungssignaldetektor (177) konfiguriert ist, das Näherungsbegrenzungssignal und Begrenzungssignale des ersten Fahrbereichs (A1) und des zweiten Fahrbereichs (A2) beruhend auf einer Differenz der Stärke von Magnetfeldern zu unterscheiden.

## Revendications

1. Système de robot mobile, comprenant :
une première ligne périphérique (291) et une deuxième ligne périphérique (292) définissant respectivement une première zone de déplacement (A1) et une deuxième zone de déplacement (A2) ; et
un robot mobile (100) comprenant un corps (110) définissant un aspect extérieur, une unité de roulement (120) prévue pour déplacer le corps (110), un détecteur de signal de limite (177) prévu pour détecter un signal de limite de proximité généré dans une zone de limite de proximité (295) où une partie de la première zone de déplacement (A1) et une partie de la deuxième zone de déplacement (A2) sont proches l'une de l'autre, et un contrôleur (190) prévu pour définir une ligne périphérique de proximité (296) sur la base du signal de limite de proximité, et commander l'unité de roulement (120) pour que le corps (110) effectue un trajet de guidage indiquant un déplacement sur la ligne périphérique de proximité (296),
**caractérisé en ce que** le contrôleur (190) est prévu pour :
définir une première ligne périphérique de guidage (295a) et une deuxième ligne périphérique de guidage (295b) parallèles à la ligne périphérique de proximité (296) intercalée entre elles ; et
commander l'unité de roulement (120) pour que, pendant le trajet de guidage, le corps (110) convertisse une direction de déplacement sur la première et la deuxième lignes périphériques de guidage (295a, 295b) et se déplace dans une direction de déplacement croisant la ligne périphérique de proximité (296).

2. Système de robot selon la revendication 1, où la première ligne périphérique (291) et la deuxième ligne périphérique (292) se croisent à l'intérieur de la zone de limite de proximité (295).

3. Système de robot mobile selon la revendication 1, où la première ligne périphérique (291) et la deuxième ligne périphérique (292) sont disposées parallèlement l'une à l'autre à l'intérieur de la zone de limite de proximité (295).

4. Système de robot mobile selon la revendication 1, où la première ligne périphérique (291) et la deuxième ligne périphérique (292) se chevauchent au moins partiellement à l'intérieur de la zone de limite de proximité (295).

5. Système de robot mobile selon l'une des revendications 1 à 4, comprenant en outre une unité d'accueil (200) à laquelle le robot mobile (100) est connecté pour recharge,
une extrémité de la zone de limite de proximité (295) étant disposée à proximité de l'unité d'accueil (200).

6. Système de robot mobile selon la revendication 5,
où l'unité d'accueil (200) comprend en outre une première borne de ligne (250a) et une deuxième borne de ligne (250b) reliées à une alimentation en courant, et
où une extrémité de la première ligne périphérique (291) et une extrémité de la deuxième ligne périphérique (292) sont reliées à la première borne de ligne (250a), et l'autre extrémité de la première ligne périphérique (291) et l'autre extrémité de la deuxième ligne périphérique (292) sont reliées à la deuxième borne de ligne (250b).

7. Système de robot mobile selon l'une des revendications 1 à 6, où le contrôleur (190) est en outre prévu pour commander l'unité de roulement (120) pour que, pendant le trajet de guidage, le corps (110) se déplace sur un trajet de guidage croisant la ligne périphérique de proximité (296) un nombre aléatoire de fois.

8. Système de robot mobile selon l'une des revendications 5 à 7, où l'unité d'accueil (200) comprend en outre une ligne de référence (270) s'étendant dans une direction du haut vers le bas croisant les lignes périphériques (291, 292), et générant un signal de position d'accueil.

9. Système de robot mobile selon l'une des revendications 1 à 8, où la zone de limite de proximité (295) est définie en tant que zone où une partie de la première ligne périphérique (291) et une partie de la deuxième ligne périphérique (292) sont présentées à l'intérieur d'une plage définie.

10. Robot mobile selon l'une des revendications 1 à 9, où le contrôleur (190) est en outre prévu pour effectuer le trajet de guidage par réception d'un signal de guidage.

11. Robot mobile selon l'une des revendications 1 à 10, où le contrôleur (190) est en outre prévu pour commander l'unité de roulement (120) pour que, pendant le trajet de guidage, le corps (110) convertisse une direction de déplacement un nombre aléatoire de fois à l'intérieur d'une surface de trajet de guidage définie autour de la ligne périphérique de proximité (296).

12. Robot mobile selon l'une des revendications 1 à 11, où le contrôleur (190) est prévu pour commander l'unité de roulement (120) pour que, pendant le trajet de guidage, le corps entre en alternance dans la première zone de déplacement (A1) et dans la deuxième zone de déplacement (A2).

13. Robot mobile selon la revendication 1, où le détecteur de signal de limite (177) comprend un capteur de champ magnétique.

14. Robot mobile selon la revendication 13, où le détecteur de signal de limite (177) est prévu pour distinguer le signal de limite de proximité et les signaux de limite de la première zone de déplacement (A1) et de la deuxième zone de déplacement (A2) area sur la base d'une différence d'intensité de champs magnétiques.
